# EUROPÄISCHE PATENTSCHRIFT

(11) **EP 0 511 963 B1**
(45) Veröffentlichungstag und Bekanntmachung des Hinweises auf die Patenterteilung: **01.02.1995**
(21) Anmeldenummer: 91900203.0
(22) Anmeldetag: 22.11.1990
(51) Int. Cl.: B08B 15/02

(54) **VERFAHREN ZUM ENTFERNEN VON TOXISCHEN MATERIALIEN UND ZELT- ODER SACKARTIGES GEBILDE DAFÜR**
PROCESS AND TENT- OR SACK-SHAPED BODY FOR REMOVING TOXIC MATERIALS
PROCEDE D'ELIMINATION DE MATIERES TOXIQUES ET DISPOSITIF APPROPRIE EN FORME DE TENTE OU DE SAC

(30) Priorität: 22.01.1990 DE 4001752
(43) Veröffentlichungstag der Anmeldung: 11.11.1992
(73) Patentinhaber: WARTIG CHEMIEBERATUNG GmbH, D-35094 Lahntal (DE)
(72) Erfinder: BERG, Alexander, D-2000 Hamburg 50 (DE); SCHWELLNUS, Konrad, D-2000 Hamburg 20 (DE); HELLWEGER, Sebastian, D-2000 Hamburg 73 (DE)
(74) Vertreter: Glawe, Delfs, Moll & Partner
(86) Internationale Anmeldenummer: EP9001999
(87) Internationale Veröffentlichungsnummer: WO9110515

(56) Entgegenhaltungen:
- EP-A- 0 178 091
- EP-A- 0 226 335
- GB-A- 2 084 211
- US-A- 4 817 644

## Beschreibung

Die Erfindung betrifft ein Verfahren zum Entfernen von toxische Stäube enthaltenden oder abgebenden, insbesondere asbesthaltigen Materialien, insbesondere Bauwerksteilen, bei dem der Arbeitsbereich mit Folien, für die toxischen Stäube undurchlässigen Textilmaterialien, Papier oder dergleichen abgeschlossen wird, bei dem der so abgeschlossene Arbeitsbereich während der Ausführung der Arbeiten durch im Arbeitsbereich befindliche Personen unter Unterdruck gehalten wird, und bei dem anschließend die Folien, Textilmaterialien oder das Papier wieder entfernt werden, wobei vor den zu entfernenden Materialien ein zelt- oder sackförmiges geschlossenes Gebilde aus Folien, Textilmaterialien oder Papier aufgestellt wird, von dem eine Wand mit einem Einschnitt versehen ist oder wird und die Ränder des Schnitts um einen verunreinigten oder zu sanierenden Bereich herum staubdicht fixiert werden, wobei nach Beendigung der Arbeiten die Ränder vom verunreinigten oder zu sanierenden Bereich gelöst werden.

In den letzten Jahren wurde festgestellt, daß Asbestfasern sehr stark gesundheitsschädliche Wirkungen haben. Es wird daher immer mehr erforderlich, asbesthaltige Materialien insbesondere aus Bauwerken zu entfernen. Ähnliche Probleme treten auch bei Materialien auf, die andere toxische Stäube entwickeln. Da aber die Probleme bei Asbest jedenfalls im Moment die größten sind, bezieht sich die folgende Beschreibung in erster Linie auf Asbest, wodurch der auch auf andere toxische Materialien gerichtete Schutzbereich aber nicht eingeschränkt wird.

Bei solchen Arbeiten zur Entfernung von asbesthaltigen Bauteilen werden asbesthaltige Feinstäube frei. Sie verunreinigen die Umgebung, die anschließend gereinigt werden muß. Solche Reinigungsarbeiten sind sehr aufwendig und teuer. Aus diesem Grund sucht man den Arbeitsbereich so klein als möglich zu halten. Dies wird üblicherweise mit Folieneinhausungen durchgeführt, die für Asbestfasern undurchlässig sind.

Ein vorbekanntes Verfahren der eingangs genannten Art ist sehr umständlich. Es wird zunächst der Arbeitsbereich mit Wänden aus Folien abgetrennt in Rahmen aus Holz, Kunststoff oder Metall, die dem Raum in jedem Einzelfall speziell angepaßt werden. Es wird dann eine Schleuse für die arbeitenden Personen und ggf. eine Materialschleuse angelegt. Anschließend wird der Arbeitsbereich dann unter Unterdruck gesetzt, damit keine Asbestfasern nach außen dringen können. Nachdem die Arbeiten zum Entfernen der asbesthaltigen Materialien beendet sind, wird der Arbeitsbereich gereinigt. Anschließend muß dann ein mehrfacher Luftwechsel durchgeführt werden (in Hamburg ist z.B. ein fünfzigfacher Luftwechsel vorgeschrieben), d.h., die Luft des abgetrennten Arbeitsbereiches muß mehrfach ausgewechselt werden. Dies beruht darauf, daß Asbestfasern eine sehr geringe Absetzgeschwindigkeit haben und im Raum schweben bleiben.

Anschließend erfolgt eine Restfaserbindung und eine Erfolgsmessung im abgetrennten Bereich. Dann werden die Wände, mit denen der Arbeitsbereich abgetrennt war, abgebaut. Bei diesem Abbau können aber erneut asbesthaltige Feinstäube freigesetzt werden, die z.B. an den Folienwänden und an den Klebebändern, mit denen die Folien zusammengeklebt sind, anhaften. Sie verunreinigen die Umgebung, die im Anschluß an diese Abbauarbeiten erneut gereinigt werden muß. Erst anschließend kann eine Erfolgsmessung der Sanierung durchgeführt werden. Es versteht sich, daß dieses Verfahren sehr aufwendig und langwierig ist.

Ähnliche Probleme treten bei Aufbau, Abbau und Entsorgung von Luftschleusen (Zugangschleusen zum Arbeitsbereich) auf, die bei der Sanierung verwendet werden. Messungen haben gezeigt, daß es z.B. bei Dreikammerschleusen zumindest in der dem Arbeitsbereich unmittelbar anschließenden Schleusenkammer zu erheblichen Kontaminationen kommen kann.

Bei Arbeiten sehr geringen Umfanges gibt es eine einfachere Alternative: hier wird der Arbeitsbereich durch einen glove-bag (Handschuhbeutel) abgetrent. Dann werden die Arbeiten zum Entfernen des asbesthaltigen Materials von außerhalb des glove-bags, in dem die Bedienungsperson in die Handschuhe hineinfaßt, durchgeführt. Anschließend erfolgt eine Restfaserbindung, der glove-bag wird entfernt und nach einer Feinreinigung u.U. eine Erfolgsmessung durchgeführt.

Dieses vereinfachte Verfahren ist zwar deutlich weniger aufwendig, kann aber auch nur in Fällen sehr kleiner Asbestbauteile verwendet werden: oft läßt die Geometrie am Ort der Verwendung eine sichere Umhüllung des Asbestproduktes nicht zu, oder die Arbeit durch Handschuhe und einen Sack behindern die Handhabung und die Sicht auf die Arbeitsstelle. Außerdem wird das Maß der zu verwendenen Werkzeuge durch die Dimensionierung des glove-bag eingeschränkt.

Bei einem Verfahren der eingangs genannten Art (EP-A-0 178 091) wird das zeltartige Gebilde nach Beendigung der Arbeiten von dem starren Gestell gelöst, das es gehalten hat. Anschließend kann es dann zusammengelegt werden, wobei aber die Gefahr besteht, daß der im Inneren befindliche Staub nach außen gelangt. Das Gebilde muß daher vorher einer sorgfältigen Innenreinigung unterzogen werden, so daß im wesentlichen die gleichen Probleme auftreten wie bei anderen vorbekannten Verfahren.

Die Aufgabe der Erfindung besteht in der Schaffung eines Verfahrens der eingangs genannten Art, das einfacher, schneller und billiger anzuwenden ist als herkömmliche Verfahren und dabei zusätzliche Sicherheit gegen Kontamination der Umgebung gibt.

Die erfindungsgemäße Lösung besteht darin, daß die vom verunreinigten oder zu sanierenden Bereich gelösten Ränder miteinander verbunden werden, daß anschließend das Gebilde unter Auspumpen der eingeschlossenen Luft kollabiert wird, und daß das so kollabierte Gebilde vom Arbeitsort entfernt wird.

Das erfindungsgemäße Verfahren ist wesentlich einfacher, da das Gebilde nach Beendigung der Arbeiten zusammengesaugt wird. Erst dadurch, daß die Ränder, die den Arbeitsbereich umschlossen haben, vorher miteinander verbunden werden, entsteht erst ein evakuierbares Gebilde. Eine vorherige Innenreinigung ist nicht erforderlich. Aufgrund der besonderen Konstruktion kann das Gebilde kontrolliert zusammengesaugt werden, was bei dem vorbekannten Gebilde (EP-A-0 178 091) nicht möglich ist, da dort nur eine nicht mehr durch die Stangen gehaltene Anordnung von Folien zusammengesaugt werden kann, die normalerweise nur zu einem Teil evakuiert werden kann.

Vor Beginn der Arbeiten am Asbestprodukt werden Ränder eines Schnittes des sackförmigen Gebildes luftdicht um den zu entfernenden Gegenstand herum an einer Wand oder dergleichen befestigt, insbesondere verklebt. Die Sanierungsarbeiten werden vom Inneren des sackförmigen Gebildes aus durchgeführt. Nach Beendigung der Arbeiten werden die Ränder von der Wand oder dergleichen getrennt und miteinander verbunden, so daß der Schnitt wieder geschlossen wird. Nachdem die Arbeitsperson das sackartige Gebilde verlassen hat, verschließt sie den Zugang z.B. durch Verkleben. Nun kann durch Entfernen der Luft aus derselben das Gebilde kollabiert, abtransportiert und gegebenenfalls entsorgt werden. Abfälle, die bei den Arbeiten anfielen, können im Gebilde verbleiben, sie müssen nicht durch Schleusen nach Reinigung nach außen transportiert werden. Damit entfällt eine weitere Möglichkeit zur Kontaminierung der Umgebung.

Ein Vorteil der Erfindung besteht in Folgendem: Es werden zwar auch hier während der Arbeiten der Innenraum und die inneren Oberflächen des sackartigen Gebildes verunreinigt, aber hier erübrigt sich die aufwendige Reinigung des Arbeitsbereiches. Nach Beendigung der Arbeiten wird das Gebilde durch Anwendung von Unterdruck kollabiert, so daß in der Luft schwebende Asbestfasern in einem Filter, der der Unterdruckquelle vorgeschaltet ist, gesammelt und damit unschädlich gemacht werden können. Fasern, die an den inneren Oberflächen des sackförmigen Gebildes haften bleiben, können nicht nach außen treten, da das gesamte sackförmige Gebilde nach Beendigung der Arbeiten entweder entsorgt oder, falls dies möglich ist, gereinigt, insbesondere gewaschen wird. Dadurch ergibt sich eine hohe Sicherheit, daß kein Staub an die Umgebung abgegeben wird, eine Messung der Staubkonzentration kann so u.U. entfallen.

Gegenüber der herkömmlichen Abschottung hat das Verfahren den Vorteil, daß ein geschlossener Arbeitsbereich zu einem Asbestprodukt geöffnet wird, und nicht um ein Asbestprodukt ein Raumteil abgetrennt und die Oberflächen in diesem Raumteil durch weitere Abklebungen geschützt werden.

Ist das zu entfernende oder zu sanierende Bauteil nicht an z.B. einer Wand angeordnet, sondern steht z.B. in Form einer Säule frei im Raum, so werden die gegenüberliegenden Ränder eines vorbereiteten Schlitzes im sackartigen Gebilde beidseitig um dieses freistehende Bauteil herumgeführt und hinter demselben aneinander fixiert, z.B. verklebt. Nach der Sanierung werden bei Unterdruck die Ränder dieser Klebestelle wieder voneinander gelöst, um das Bauteil herum nach vorne geführt und dort wieder miteinander verbunden. Dies muß abschnittsweise von oben nach unten oder unten nach oben so erfolgen, so daß sich zu keinem Zeitpunkt eine große Öffnung bildet, sondern die Ränder immer verhältnismäßig nahe am zu sanierenden Bauteil anliegen. Nur so kann sichergestellt werden, daß durch die dann verhältnismäßig kleine Öffnung wegen des Unterdruckes kein Staub nach außen gelangen kann.

Da das Gebilde bei Anlieferung allseits geschlossen und luftdicht ist, kann es mit Hilfe von Überdruck aufgeblasen und aufgestellt werden. In diesem Zustand kann es dann durch Stangen oder durch Befestigung z.B. Verklebung an der Umgebung im aufgespannten Zustand gehalten werden, auch wenn anschließend während der Durchführung der Arbeiten Unterdruck angelegt wird.

Das sackartige Gebilde (bestehend aus zwei oder mehreren Kammern) kann nicht nur als komplette Baustelleneinrichtung für die Sanierung von Asbestquellen geringeren Umfangs eingesetzt werden, wobei es wie beschrieben um das zu sanierende Bauteil herum fixiert, insbesondere geklebt wird. Das Gebilde kann auch in seiner Dreikammerausführung als Zugangsschleuse für Personen zu einem (in herkömmlicher Weise mit Folien begrenzten) Arbeitsraum verwandt werden, in dem eine eigentliche Asbestsanierung vorgenommen wird und für den Schleusen vorgeschrieben sind. In diesem Falle wird das Gebilde nicht um den zu sanierenden Bauteil herum fixiert, sondern um den (z.B. mit einer schlitzförmigen Öffnung versehenen) Zugang zum sogenannten schwarzen Bereich, in dem die Sanierungsarbeiten vorgenommen werden.

Gegenüber herkömmlichen Dreikammerschleusen bietet die Verwendung des sackartigen Gebildes neben dem raschen Aufbau durch Aufblasen folgende Vorteile:
- Es hat sich gezeigt, daß zumindest die vorderste, d.h. dem schwarzen Bereich unmittelbar benachbarte Schleusenkammer verunreinigt wird, die Schleuse daher vor Abbau gereinigt werden muß. Dieser Arbeitsschritt kann bei Verwendung des Gebildes entfallen: hier werden die Zugänge zur Schleuse nach Gebrauch zugeklebt, das Gebilde durch Unterdruck kollabiert und entsorgt bzw. wenn möglich für eine Wiederverwendung gewaschen.
- Der Schleusensack kann aber auch an mehreren Stellen wiederverwandt werden: dazu wird zunächst von der letzten Schleusenkammer aus der Zugang zum eigentlichen Arbeitsbereich verklebt, dann der entsprechende Schlitz in der Schleusenkammer. Nach Verlassen des Gebildes wird es von außen zugeklebt, von dem eigentlichen Arbeitsbereich gelöst und zur nächsten Sanierungstelle getragen. Durch teilweises Kollabieren durch Absaugen kann es auch durch enge Türen in andere Räume verbracht werden.

Vorteilhafterweise werden doppelwandige Folien verwendet, die nicht nur eine größere Sicherheit bei Auftreten von Rissen in den Folien oder Textilmaterialien gewährleisten, sondern auch eine einfache Konstruktion von Schleusen und dergleichen ermöglichen. Ein doppelwandiges zelt- oder sackartiges Gebilde zur Durchführung des Verfahrens zeichnet sich dadurch aus, daß es Taschen zur Aufnahme von Stangen aufweist, die durch an Längskanten verschweißte Bereiche der beiden Folien gebildet sein können. Derartige Taschen haben den Vorteil, daß die Stangen nicht kontaminiert werden, also immer wieder verwandt werden können. Vorteilhafterweise weist das sackartige Gebilde L-förmige Einschnitte für Belüftungsöffnungen, Zutrittsöffnungen oder Schleusen auf. Die L-förmigen Einschnitte können dabei unterschiedlich lang sein, so daß bei aufeinanderliegenden Folien Luftdurchtritt nur in einer Richtung möglich ist.

Vorteilhafterweise weist das sackartige Gebilde einen Grundrahmen auf, mit dem die aufspannenden Stangen verbindbar sind.

Wenn das sackartige Gebilde an den Einschnitten mit Reißverschlüssen versehen ist, so können diese Einschnitte auch häufiger geöffnet oder verschlossen werden, was insbesondere dann von Interesse ist, wenn das sackartige Gebilde mehr als einmal verwendet wird, wofür es allerdings zwischendurch gereinigt, insbesondere gewaschen werden muß. Für diesen Zweck könnte das Gebilde z.B. in einem wasserlöslichen Entsorgungssack von der Baustelle entfernt werden, der sich beim Waschvorgang dann auflöst.

Das Gebilde kann aber an den Einschnitten auch mit Selbstklebebändern versehen sein, die selbstklebende Schutzfolien aufweisen können.

Die Erfindung wird im folgenden anhand von vorteilhaften Ausführungsformen unter Bezugnahme auf die beigefügten Zeichnungen beschrieben. Es zeigen:
- Fig. 1: eine Seitenansicht einer doppelwandigen Folie, die zur Herstellung des zelt- oder sackförmigen Gebildes dient;
- Fig. 2: das Gebilde, nachdem die Folienbahn der Fig. 1 zu einem Ring zusammengelegt und an der Stoßstelle verschweißt ist;
- Fig. 3: eine Ansicht, bei der Stangen in die Taschen eingeschoben werden;
- Fig. 4: eine Darstellung der Aufstellung des Gebildes;
- Fig. 5: das fertige Gebilde nach dem Aufstellen;
- Fig. 6: eine Ansicht im Schnitt von oben eines anderen Gebildes;
- Fig. 7: das Gebilde der Fig. 5 während der Sanierungsarbeiten;
- Fig. 8: einen Schnitt durch die Stelle, an der das asbesthaltige Material entfernt werden soll;
- Fig. 9: in ähnlicher Ansicht wie in Fig. 6 ein weiteres Gebilde;
- Fig. 10: eine andere Anwendung der Erfindung; und
- Fig. 11 und 12: verschiedene Arten der Verbindung zwischen einem Arbeitsbereich und einer Luftschleuse.

Das zelt- oder sackartige Gebilde kann z.B. dadurch hergestellt werden, daß zwei Folienbahnen übereinander gelegt werden und dann insbesondere vier Stellen durch zwei parallele Schweißnähte 2 in einem kleinen Abstand verschweißt werden.

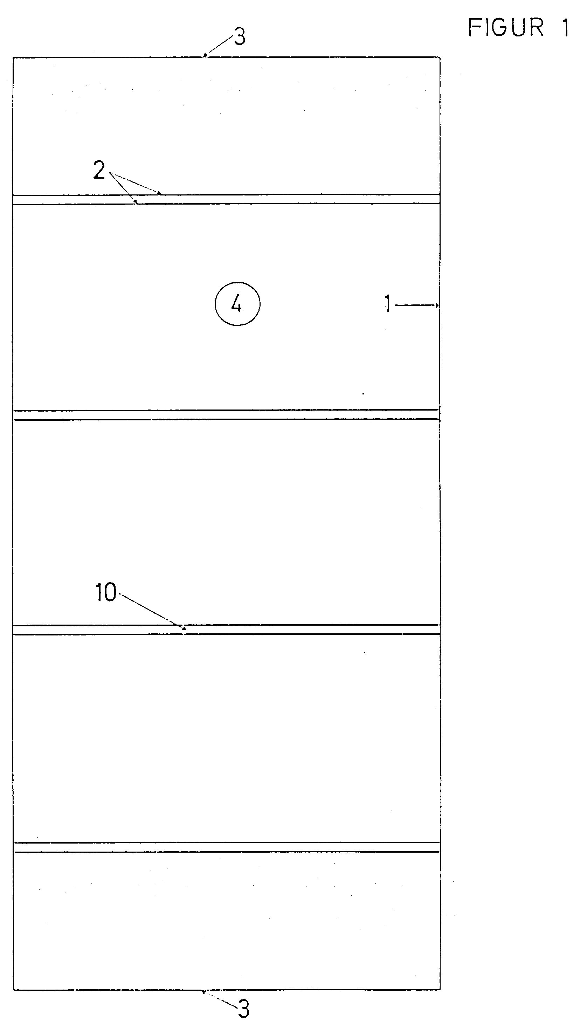

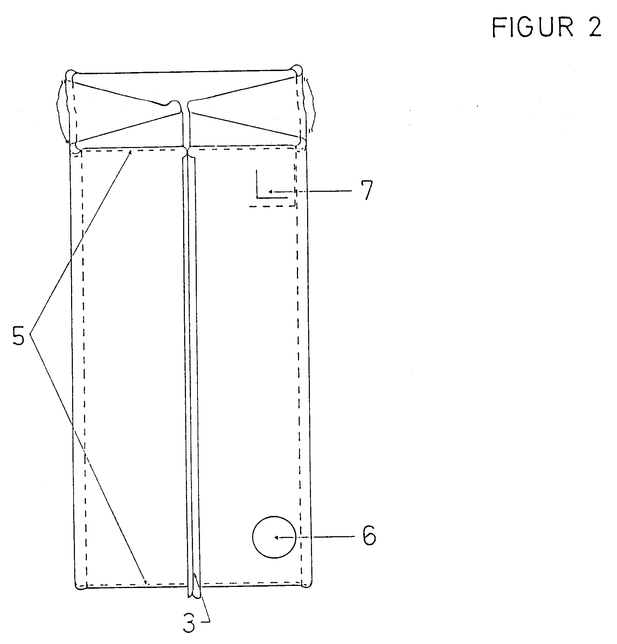

Das Gebilde wird dann in die Form der Fig. 2 zusammengelegt, bei der die äußeren Ränder 3 der Folienbahnen 4 der Fig. 1 überlappen. Hier wird dann eine Verschweißung durchgeführt;
anschließend erfolgt dann eine Verschweißung längs der gestrichelten Linien 5, so daß ein geschlossenes Gebilde erhalten wird. Dieses Gebilde wird mit einer Öffnung 6 versehen, an die eine Druckluftquelle und eine Unterdruckquelle angeschlossen werden kann. Bei 7 weist das Gebilde zwei L-förmige Einschnitte auf, von denen der größere auf der inneren Folie vorgesehen ist. Hier kann Luft eindringen, wenn nach Aufstellen des folienartigen Gebildes Unterdruck angelegt wird, so daß eine Luftzirkulation stattfindet. Beim Überdruck legt sich aber der größere Bereich, der durch den größeren L-förmigen Einschnitt eingeschlossen ist, gegen die äußere Folie an, so daß in dieser Richtung keine Luft entweichen kann.

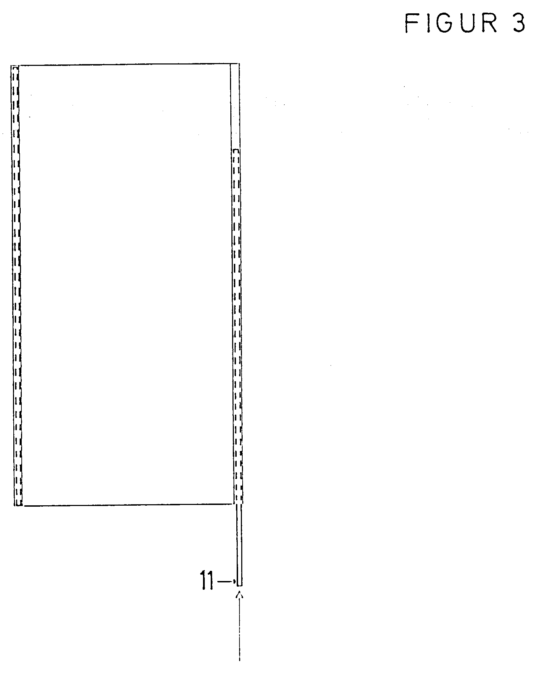

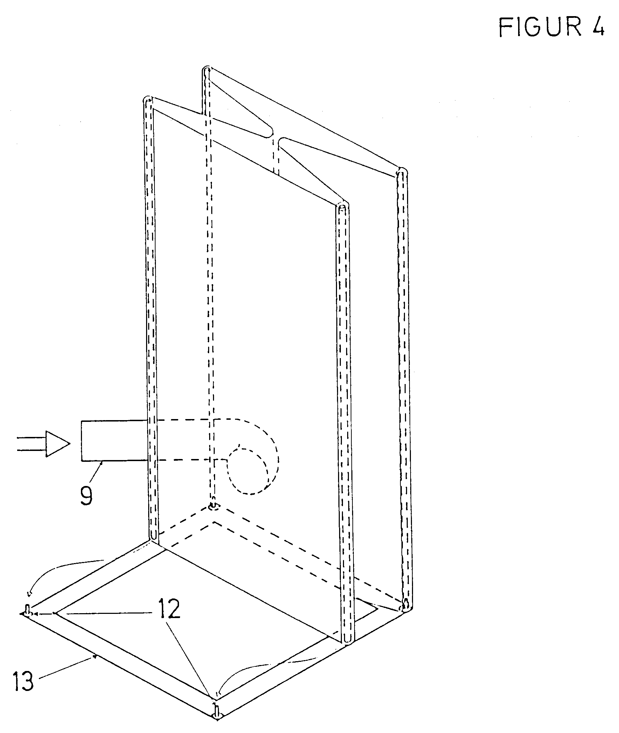

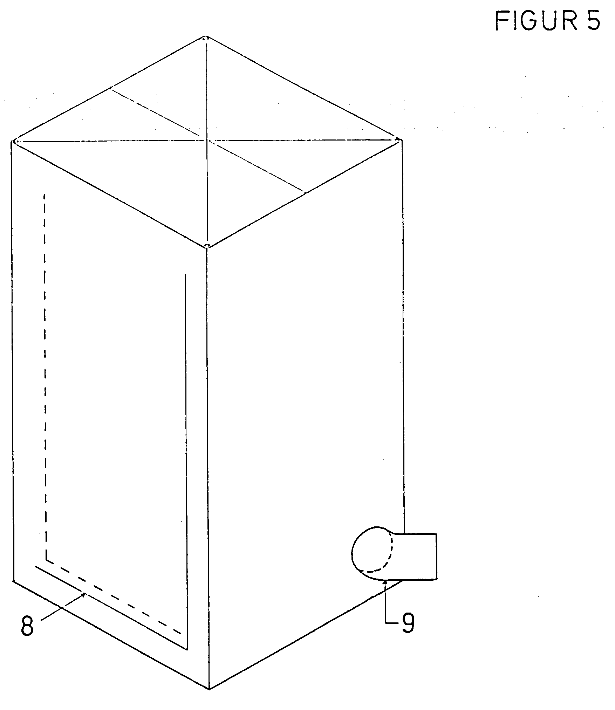

Zunächst werden aber in die Taschen 10 zwischen den parallelen Schweißnähten 4, die zu diesem Zweck unten aufgeschnitten werden, Stangen 11 eingesteckt (Fig. 3). Zwei dieser Stangen werden dann, wie dies in Fig. 4 gezeigt ist, in Ausnehmungen 12 eines Grundrahmens 13 eingesteckt. Anschließend wird dann über den Schlauch 9 Luft zugeführt, wodurch sich das geschlossene Gebilde erweitert, bis auch die vorderen Stangen 11 in die Ausnehmungen 12 gesteckt werden können. Auf diese Weise erhält man das Gebilde der Fig. 5.

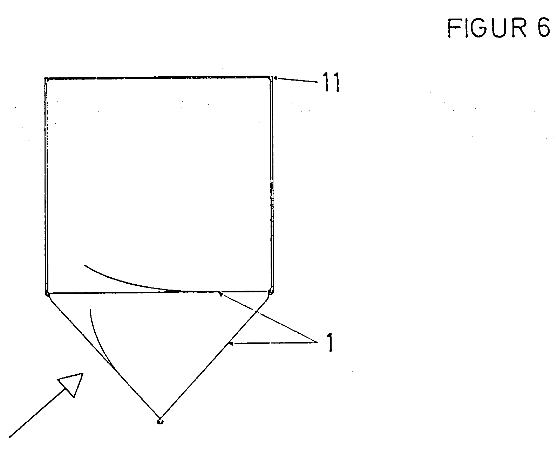

Bei der Ausführungsform der Fig. 6 liegen die beiden Folien 1 nicht überall übereinander. Man erhält auf diese Weise eine Einstiegsschleuse. Das Eindringen von Luft kann hier verhindert werden, indem z.B. von außen größere Folien auf die Einschnitte gelegt werden. Auch könnten die Öffnungen mit einem Reißverschluß verschlossen oder verklebt werden, während die Arbeiten durchgeführt werden.

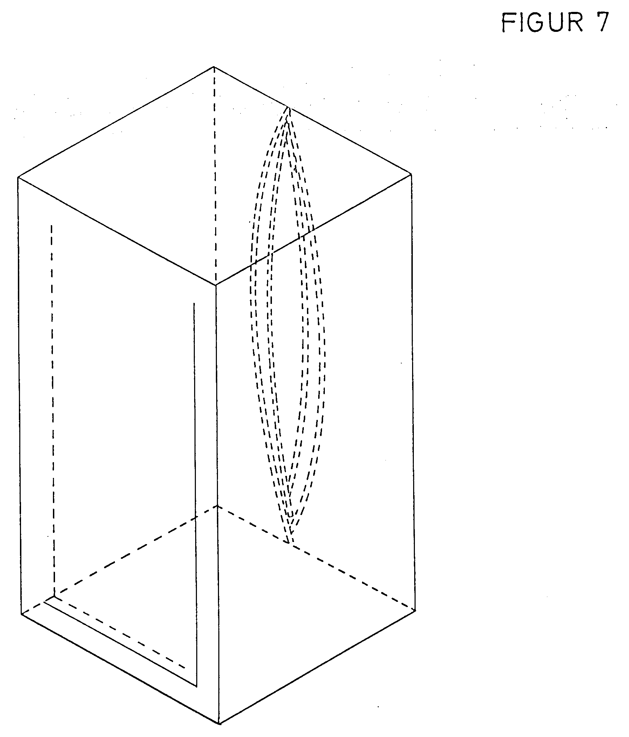

Wie man in Fig. 7 erkennt, ist um den Arbeitsbereich 16 ein Einschnitt durch beide Folien gemacht worden, die hier an einer Wand 13 um den Arbeitsbereich 16 befestigt sind, wobei die äußere Folie die innere vollständig umschließt.

Nach Beendigung der Arbeiten werden die Einschnitte um den Arbeitsbereich 16 wieder geschlossen, indem die Folien von der Wand entfernt und miteinander verbunden werden, indem man die vorteilhafterweise hier vorgesehenen Klebestreifen aufeinander drückt. Nachdem die Arbeitsperson das Gebilde verlassen hat, kann dann über den Schlauch 9 das Gebilde evakuiert werden, so daß es kollabiert und entsorgt werden kann.

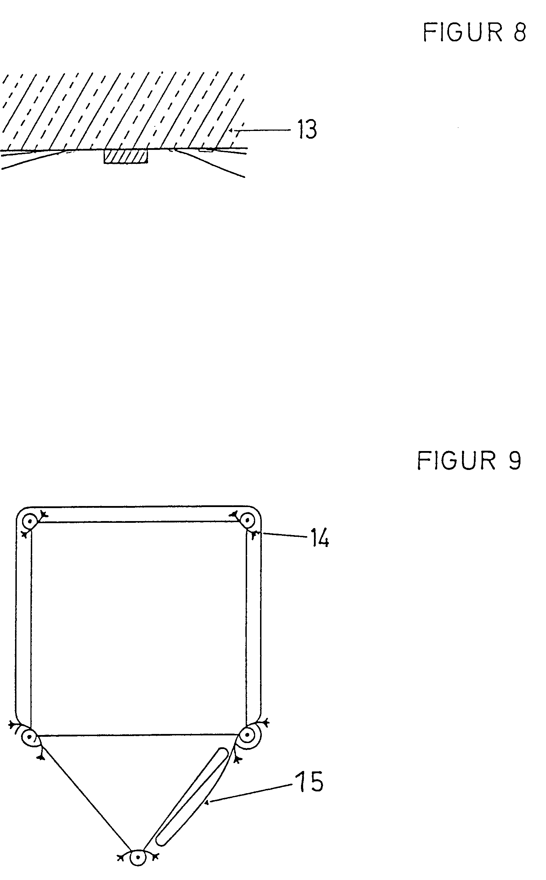

In Fig. 9 ist ein ähnliches zelt- oder sackartiges Gebilde wie in Fig. 6 gezeigt. Die Schweißungen und welche Folien zur Schweißung zusammengefaßt werden, sind bei 14 angedeutet. Bei 15 ist die Folie dreifach übereinandergelegt, um leicht einen doppellagigen Einstieg schaffen zu können.

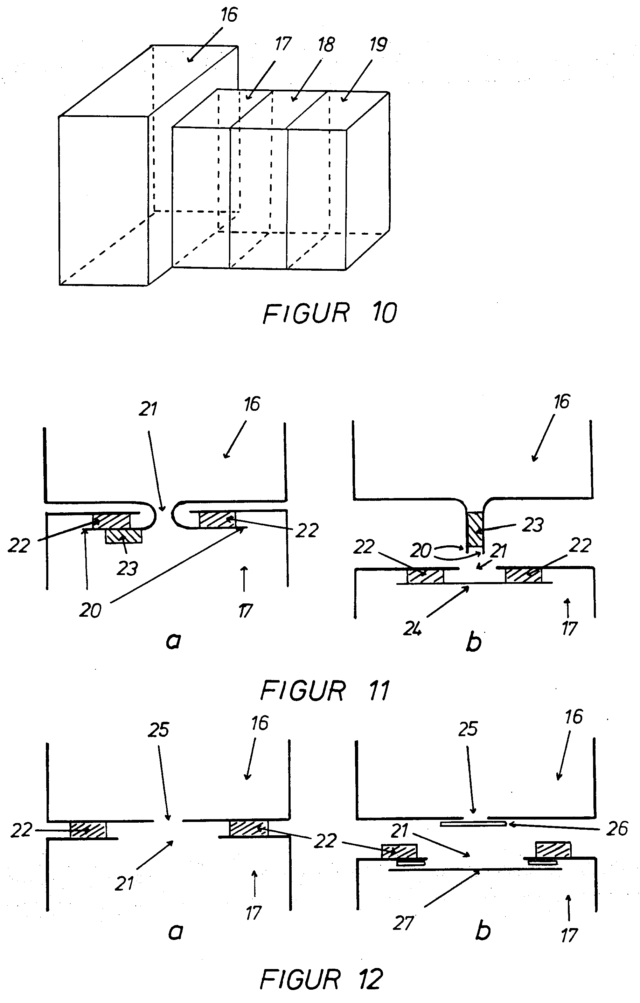

Wenn in Obigem von "zeltartig" oder "sackartig" die Rede ist, so ist damit gemeint, daß die Gebilde allseits geschlossen sind. Eine weitere Ausführungsform solcher Gebilde ist in Fig. 10 gezeigt. Die Anordnung weist dort einen Arbeitsbereich 16 und eine Dreikammer-Luftschleuse auf, die aus Kammern 17, 18 und 19 besteht. Solche Mehrkammer-Schleusen sind für umfangreichere Sanierungsarbeiten vorgeschrieben und müssen zum Teil z.B. auch eine Dusche enthalten.

Sowohl das Gebilde des Arbeitsbereiches 16 als auch das Gebilde der Schieusenkammer 17, 18, 19 kann erfindungsgemäß so ausgestaltet sein, daß es durch Unterdruck kollabierbar ist. Die Schleuse 17, 18, 19 kann dabei mehrfach verwendet werden und ist zu diesem Zweck so mit dem Arbeitsbereich 16 verbunden, wie dies in den Fig. 11 und 12 dargestellt ist.

Bei der Ausführungsform der Fig. 11 reichen im verbundenen Zustand (Fig. 11a) Streifen 20 des Randes des Bereiches 16 durch einen Schlitz 21 des Bereiches 17 in denselben hinein und sind nach außen umgelegt. Die Verbindung erfolgt dabei mit Hilfe von beidseitig klebenden Kiebestreifen 22. Soll die Schleuse 17 vom Arbeitsbereich 16 getrennt werden, so werden zunächst die beiden Ränder 20 vom Inneren der Schleusenkammer 17 gelöst, zusammengelegt und durch den beidseitig klebenden Klebestreifen 23 aneinander fixiert. Anschließend wird dann auf die beiden Klebestreifen 22 eine Folie 24 aufgelegt, die die Öffnung 21 verschließt. Danach kann dann die Schleuse 17 von dem Arbeitsbereich 16 gelöst werden.

Bei der Ausführungsform der Fig. 12 ist der Öffnungsschlitz 21 der Schleusenkammer 16 größer als der entsprechende Schlitz 25 des Arbeitsbereiches. Es kann daher vom Inneren der Schleusenkammer 17 eine Klebefolie 26 auf den Schlitz 25 geklebt werden, so daß dieser verschlossen wird. Anschließend wird dann der Schlitz 21 der Schleusenkammer 17 mit einer am Rand klebenden Folie 27 verschlossen. Danach kann dann von außen die Schleusenkammer 17 vom Arbeitsbereich 16 getrennt werden. Bei beiden Ausführungsformen ist dabei sichergestellt, daß auch während des Trennens und nach dem Trennen kein Staub nach außen dringen kann.

## Patentansprüche

1. Verfahren zum Entfernen von toxische Stäube enthaltenden oder abgebenden, insbesondere asbesthaltigen Materialien, insbesondere Bauwerksteilen, bei dem der Arbeitsbereich (16) mit Folien (1), für die toxischen Stäube undurchlässigen Textilmaterialien, Papier oder dergleichen abgeschlossen wird, bei dem der so abgeschlossene Arbeitsbereich (16) während der Ausführung der Arbeiten durch im Arbeitsbereich (16) befindliche Personen unter Unterdruck gehalten wird, und bei dem anschließend die Folien, Textilmaterialien oder das Papier (1) wieder entfernt werden, wobei vor den zu entfernenden Materialien ein zelt- oder sackförmiges geschlossenes Gebilde aus Folien, Textilmaterialien oder Papier (1) aufgestellt wird, von dem eine Wand mit einem Einschnitt versehen ist oder wird und die Ränder des Schnitts um einen verunreinigten oder zu sanierenden Bereich herum staubdicht fixiert werden, wobei nach Beendigung der Arbeiten die Ränder vom verunreinigten oder zu sanierenden Bereich gelöst werden, dadurch gekennzeichnet, daß diese Ränder miteinander verbunden werden, daß anschließend das Gebilde unter Auspumpen der eingeschlossenen Luft kollabiert wird, und daß das so kollabierte Gebilde vom Arbeitsort entfernt wird.

2. Verfahren nach Anspruch 1, dadurch gekennzeichnet, daß das Gebilde mit Hilfe von Überdruck aufgestellt wird.

3. Verfahren nach einem der Ansprüche 1 oder 2, dadurch gekennzeichnet, daß der Rand des Schlitzes um die zu sanierenden oder zu entfernenden Bauteile herum, dieselben umschließend, an einem umgebenden Teil (13) fixiert wird.

4. Verfahren nach einem der Ansprüche 1 oder 2, dadurch gekennzeichnet, daß gegenüberliegende Ränder des Schlitzes beidseitig um ein freistehendes zu sanierendes oder zu entfernendes Bauteil herum geführt und hinter demselben aneinander fixiert werden.

5. Verfahren nach einem der Ansprüche 1 oder 2, dadurch gekennzeichnet, daß die Ränder an einer Eingangsöffnung zu einem Arbeitsbereich (16) fixiert werden.

## Claims

1. Method for the removal of materials containing or releasing toxic dusts, in particular asbestos-containing materials, in particular building parts, in which the working area (16) is sealed off with films (1), textile materials, paper or the like which are impermeable to the toxic dusts, in which the working area (16) sealed off in this way is kept under reduced pressure while the work is performed by persons situated in the working area (16), and in which the films, textile materials or the paper (1) are then removed again, a tent- or sack-like closed structure made of films, textile materials or paper (1) being erected in front of the materials to be removed, of which structure one wall has or is provided with a slit and the edges of the slit are fixed dust-tightly around an area which is contaminated or to be rehabilitated, after the work is completed the edges being detached from the area which is contaminated or to be rehabilitated, characterized in that these edges are joined together, in that the structure is then collapsed by the enclosed air being pumped out and in that the structure collapsed in this way is removed from the work site.

2. Method according to Claim 1, characterized in that the structure is erected with the aid of superatmospheric pressure.

3. Method according to either Claim 1 or Claim 2, characterized in that the edge of the slit is fixed to a surrounding part (13) around the building parts to be rehabilitated or removed, enclosing the same.

4. Method according to either Claim 1 or Claim 2, characterized in that opposite edges of the slit are passed on each side around a free-standing building part to be rehabilitated or removed and are fixed together behind the same.

5. Method according to either Claim 1 or Claim 2, characterized in that the edges are fixed to an entry opening into a working area (16).

## Revendications

1. Procédé d'enlèvement de matériaux, notamment d'éléments de construction, renfermant ou libérant des poussières toxiques, en particulier contenant de l'amiante, selon lequel la zone de travail (16) est isolée à l'aide de feuilles (1), de matériaux textiles étanches aux poussières toxiques, de papier ou analogues, selon lequel la zone de travail (16), ainsi isolée, est maintenue sous dépression pendant l'exécution des travaux par des personnes se trouvant dans la zone de travail (16), et selon lequel les feuilles, les matériaux textiles ou le papier (1) sont ensuite à nouveau retirés, une structure fermée en forme de tente ou de sac, constituée de feuilles, de matériaux textiles ou de papier (1), étant dressée devant les matériaux à enlever, structure dont une paroi comporte ou est dotée d'une découpe et les bords de la découpe sont fixés, de façon étanche à la poussière, autour d'une zone polluée ou devant être assainie, les bords étant, après la fin des travaux, détachés de la zone polluée ou devant être assainie, caractérisé en ce que ces bords sont reliés l'un à l'autre, en ce qu'ensuite la structure est affaissée par pompage de l'air qu'elle renferme, et en ce que la structure ainsi affaissée est éloignée du lieu de travail.

2. Procédé selon la revendication 1, caractérisé en ce que la structure est dressée à l'aide d'une surpression.

3. Procédé selon la revendication 1 ou 2, caractérisé en ce que le bord de la fente est fixé, en les entourant, autour des éléments de construction devant être assainis ou enlevés, sur un élément environnant (13).

4. Procédé selon la revendication 1 ou 2, caractérisé en ce que des bords opposés de la fente sont tirés autour d'un élément de construction isolé devant être assaini ou enlevé, de part et d'autre de celui-ci, et sont fixés l'un à l'autre derrière cet élément de construction.

5. Procédé selon la revendication 1 ou 2, caractérisé en ce que les bords sont fixés le long d'une ouverture d'accès à une zone de travail (16).
